Europäisches Patentamt

European Patent Office

Office européen des brevets

(19)

(11) Numéro de publication: **0 038 255**
A1

# (12) DEMANDE DE BREVET EUROPEEN

(21) Numéro de dépôt: 81400567.4

(51) Int. Cl.³: **F 16 L 41/02,** E 03 F 5/02

(22) Date de dépôt: 09.04.81

(30) Priorité: 15.04.80 FR 8008393

(71) Demandeur: **SYNDICAT NATIONAL PROFESSIONNEL DES ENTREPRENEURS DE TRAVAUX DE DRAINAGE, 38, boulevard des Batignolles, F-75017 Paris (FR)**
Demandeur: **LES PLASTIQUES DE FRANCE Société Anonyme, 7 et 9, rue Gustave-Eiffel, F-13010 Marseille (FR)**

(43) Date de publication de la demande: 21.10.81
Bulletin 81/42

(72) Inventeur: **Fournier, Christian, 50, rue du Gué de Ville, F-77550 Moissy Cramayel (FR)**
Inventeur: **Scialom, Richard, 8a, Rue Bienvenu, F-13010 Marseille (FR)**

(84) Etats contractants désignés: **AT BE CH DE GB IT LI LU NL SE**

(74) Mandataire: **Tony-Durand, Serge, Cabinet Tony-Durand 22, Boulevard Voltaire, F-75011 Paris (FR)**

(54) **Boîte de jonction pour installation de drainage agricole ou d'assainissement.**

(57) Boîte de jonction pour installation de drainage agricole ou d'assainissement. La boîte comprend plusieurs secteurs cylindriques 3–6 percés d'ouvertures 7–11 décentrées, entourées de manchons 12–15 d'appui et de raccordement pour des tuyaux collecteurs 2; ces secteurs constituent un cylindre complet lorsqu'ils sont assemblés, et des bouchons réducteurs 24 percés de trous 26 peuvent être montés rotativement sur les manchons, afin de permettre le raccordement de collecteurs 1 de diamètres réduits. Cet agencement permet de régler les ouvertures de raccordement en hauteur et en orientation dans un plan horizontal aux différents collecteurs à raccorder, suivant toutes les configurations pouvant se présenter.

"Boîte de jonction pour installation de drainage agricole ou d'assainissement"

La présente invention a pour objet une boîte de jonction pour installation de drainage agricole, ou d'assainissement, agencée pour servir de raccordement à plusieurs tuyaux collecteurs.

On sait qu'une boîte de jonction pour des installations de ce genre joue avant tout un rôle de pièce de raccordement, et peut se placer à toutes les connexions de colleurs. Cette boîte se trouve donc fréquemment placée en plein champ, ce qui implique une épaisseur de recouvrement importante pour être hors d'atteinte des matériels culturaux.

De ce fait, la boîte de jonction est d'un accès difficile. L'expérience montre qu'elle est peu fréquemment ouverte, de sorte qu'il vautmieux ne pas prévoir de décantation, contrairement aux regards visitables.

On a longtemps réalisé des boîtes de jonction maçonnées sur place. On utilise maintenant soit des boîtes de jonction préfabriquées en béton, soit des boîtes de jonction en matière plastique (chlorure de polyvinyle).

Les boîtes préfabriquées en béton, qui peuvent être cylindriques ou de section carrée, sont constituées d'un récipient avec ou sans fond, recouvert d'un couvercle en béton armé, des amincissements étant prévus dans les parois pour faciliter le percement.

Une telle boîte ne permet pas de par sa constitution, de modifier les hauteurs des ouvertures de raccordement pour les adapter à celles, qui peuvent être variables, des différents tuyaux collecteurs. Elle est de ce fait d'une utilisation souvent malaisée, compte tenu des hauteurs variables des différents tuyaux à raccorder.

De plus, en raison de la fixité de la structure de cette boîte, il n'est évidemment pas possible de modifier l'orientation d'une ouverture de raccordement pour la placer en regard du tuyau collecteur auquel elle doit être raccordée sans déplacer en même temps toutes les autres, ce qui complique la réalisation des branchements.

L'invention a pour but de remédier à ces inconvénients en proposant une boîte de jonction d'un emploi beaucoup plus souple que les boîtes connues, et qui permette en particulier de régler la hauteur individuelle de chaque ouverture de raccordement pour l'adapter à la hauteur de l'orifice d'arrivée du tuyau collecteur auquel elle doit être raccordée, ce réglage devant en outre pouvoir se faire angulairement dans un plan horizontal, sans difficulté.

La boîte de jonction pour .installation de drainage agricole comprend des secteurs cylindriques percés d'ouvertures entourées extérieurement de manchons de réception et d'appui pour des tuyaux collecteurs de diamètres correspondants.

Conformément à l'invention, les ouvertures sont décentrées par rapport aux axes de symétrie des secteurs qui constituent un cylindre complet lorsqu'ils sont assemblés, et cette boîte comporte un fond et un couvercle présentant des rainures circulaires dans lesquelles peuvent coulisser les différents secteurs, qui sont susceptibles d'être positionnés de façon différente relativement les uns aux autres, afin d'orienter leurs ouvertures de raccordement aux collecteurs suivant différentes combinaisons appropriées.

Quatre secteurs circulaires identiques de 90° étant ainsi par exemple prévus, avec chacun une ouverture décentrée, on comprend qu'il est possible de réaliser toute une série de combinaisons en ce qui concerne l'orientation angulaire de chaque ouverture, en assemblant convenablement les secteurs en fonction des raccordements à réaliser.

La boîte selon l'invention offre ainsi une souplesse d'utilisation permettant de l'adapter sans difficulté à pratiquement tous les réseaux de collecteurs susceptibles de se présenter, le nombre de secteurs pouvant évidemment varier en fonction des besoins.

Suivant une autre caractéristique essentielle de l'invention, la boîte est équipée de bouchons réducteurs dans lesquels sont formés des trous excentrés de diamètre variable de raccordement à des collecteurs, ces bouchons étant adaptés pour venir s'encastrer sur les manchons en pouvant tourner autour de ceux-ci, afin de faire varier la hauteur des trous de raccordement pour les ajuster à celle des collecteurs correspondants.

Le fait d'adapter des bouchons réducteurs sur les manchons entourant les ouvertures des secteurs cylindriques offre donc une possibilité supplémentaire d'exécuter des raccordements à des tuyaux collecteurs de diamètres inférieurs à ceux des ouvertures des secteurs circulaires, ces tuyaux venant se brancher à l'intérieur des trous des bouchons réducteurs.

D'autres particularités et avantages de l'invention apparaîtront au cours de la description qui va suivre. Aux dessins annexés, on a représenté à titre d'exemple non limitatif, une forme de réalisation de la boîte de jonction selon l'invention.

La figure 1 est une vue en perspective éclatée d'une forme de réalisation de la boîte de jonction selon l'invention, et de tuyaux collecteurs auxquels elle peut être branchée.

La figure 2 est une vue en perspective de la boîte de jonction de la figure 1 assemblée.

La figure 3 est un schéma explicatif de différentes possibilités de montage et d'utilisation de la boîte des figures 1 et 2, en vue de réaliser une série de raccordements différents.

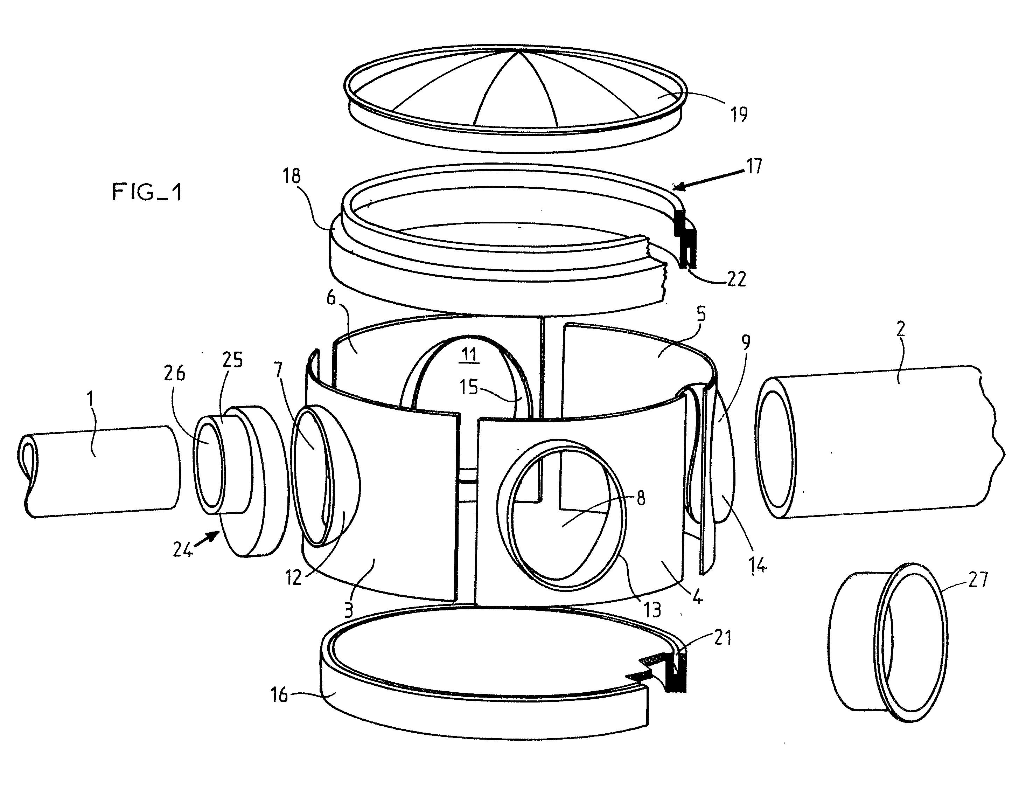

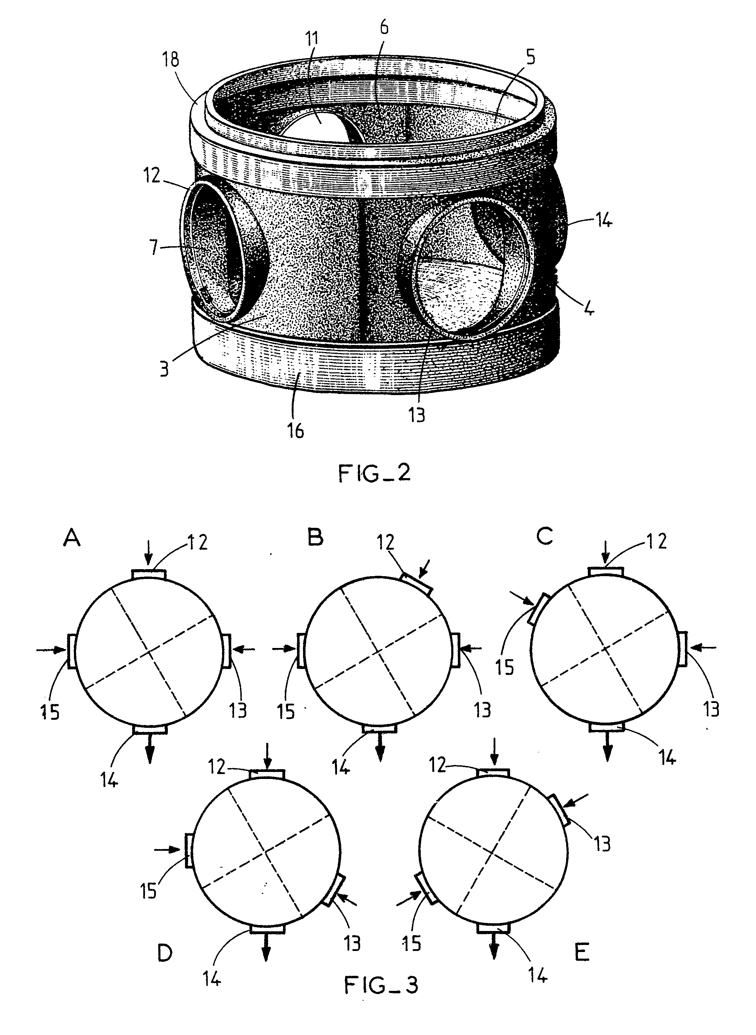

La boîte de jonction représentée aux figures 1 et 2 est destinée aux installations de drainage agricole ou d'assainissementet est agencée pour pouvoir être raccordée à plusieurs tuyaux collecteurs tels que les collecteurs 1 et 2.

Conformément à l'invention, la boîte comprend au moins deux secteurs cylindriques, qui sont au nombre de quatre (3, 4, 5, 6) dans l'exemple de réalisation représenté, percés d'ouvertures (7, 8, 9, 11) décentrées par rapport aux axes de symétrie de ces secteurs. Ces ouvertures sont chacune entourée extérieurement d'un manchon (12, 13, 14, 15) de réception et d'appui pour des tuyaux collecteurs de diamètres correspondants, tels que le collecteur 2.

Les quatre secteurs circulaires (3, 4, 5, 6) s'étendent chacun sur 90 degrés et sont identiques, de façon à pouvoir former un cylindre complet lorsqu'ils sont assemblés.

La boîte comporte en outre un fond 16 et un couvercle 17, lui-même constitué d'une couronne 18 dont le diamètre est sensiblement égal à celui du cylindre formé par l'assemblage des quatre secteurs (3-6), et d'un obturateur circulaire 19 venant s'encastrer amoviblement dans la couronne 17.

L'obturateur 19 a une résistance suffisante pour pouvoir résister au poids des terres dans lesquelles la boîte doit être enfouie.

Le fond 16 et la couronne 18 présentent chacune une rainure circulaire, respectivement 21 et 22 de diamètres identiques et ménagés à la périphérie desdites pièces, ces rainures 21, 22 étant dimensionnées pour que les bords opposés des secteurs (3-6) puissent venir s'y encastrer et y coulisser.

Suivant une autre caractéristique de l'invention, la boîte de jonction est équipée de bouchons réducteurs tels que (24) qui peuvent venir s'encastrer autour des manchons (12-15) en pouvant tourner autour de ceux-ci, et dans lesquels sont formés des trous excentrés 26. Ces trous sont délimités par des collerettes cylindriques 25 de diamètre variable, correspondant à celui du collecteur 1, l'ensemble du bouchon étant réalisé d'une seule pièce moulée, de préférence en matière plastique.

Les trous 26 ont un diamètre nettement inférieur à celui des ouvertures 7-11, de façon à pouvoir recevoir des extrémités de collecteurs de diamètres réduits correspondants tels que le collecteur 1, qui vient s'appuyer sur la collerette cylindrique délimitant le trou 26, quand on réalise le branchement correspondant.

Enfin, la boîte est pourvue de bouchons amovibles tels que 27, qui assurent l'obturation de celles des ouvertures 7-11 qui ne sont pas utilisées pour un raccordement à un réseau donné.

Ainsi, il est possible d'effectuer le raccordement d'un collecteur directement par introduction de l'extrémité de celui-ci dans le manchon correspondant choisi parmi les manchons 12-15, pour un collecteur tel que 2 ayant un diamètre égal à celui du manchon, ou bien pour un collecteur tel que 1 de diamètre réduit, on peut exécuter le branchement par l'intermédiaire d'un bouchon tel que 24.

En positionnant chaque secteur circulaire 3, 4, 5, 6 de façon à placer son ouverture de raccordement correctement en orientation angulaire par rapport à la hauteur et a l'orientation du collecteur correspondant, et en faisant coulisser les secteurs dans les rainures 21, 22, on peut réaliser un premier réglage des ouvertures de raccordement en orientation angulaire.

Ce réglage peut être complété par un second réglage pour des collecteurs de diamètre réduit, tels que 1, adaptés à s'engager dans les trous 26 d'un bouchon réducteur 24 équipé d'une collerette saillante 25 excentrée. Pour ce faire, il suffit de faire pivoter le ou les bouchons concernés sur leur manchon de support (12, 13 ...) de façon à positionner exactement le trou du bouchon à la hauteur et à l'orientation angulaire du collecteur associé.

Bien entendu, la position de chaque secteur circulaire 3-6 peut être inversée par pivotement de 180 degrés ou engagement de ses bords dans les rainures 21, 22.

On réalise ainsi, par l'assemblage des secteurs circulaires 3-6 et éventuellement des bouchons réducteurs nécessaires tels que 24, une boîte de jonction d'utilisation extrêmement souple et aisée, pouvant s'adapter pratiquement à toutes sortes de combinaisons de réseaux collecteurs, dans la limite du nombre d'ouvertures de raccordement prévues dans les secteurs.

Le schéma représenté à la figure 3 illustre un certain nombre de possibilités d'utilisation de la boîte de jonction selon l'invention.

Dans la situation A, les quatre manchons 12-15 sont disposés à 90 degrés les uns des autres, suivant une répartition symétrique, pour quatre collecteurs se croisant à angle droit. Dans la situation représentée en B, la la position du secteur 3 portant le manchon 12 a été modifiée de façon à déplacer le manchon 12 angulairement dans le sens des aiguilles d'une montre, vers le collecteur voisin 13.

Dans la situation schématisée C, c'est le secteur 6 portant le manchon 15 qui a été repositionné de façon similaire, de façon à rapprocher son manchon 15 du manchon 12 représenté dans la situation A.

La situation D diffère de la situation 1 par le positionnement du secteur 4 tel que son manchon 13 est rapproché du manchon 14, tandis que la situation E montre les secteurs repositionnés de façon à rapprocher deux à deux les manchons 12 et 13 d'une part, 14 et 15 d'autre part.

Ainsi, il est possible d'adapter la boîte à toutes les configurations d'arrivée et de départ des collecteurs susceptibles de se présenter, et ce aussi bien en orientation angulaire, qu'en diamètre des collecteurs à raccorder et éventuellement en hauteur.

La boîte selon l'invention présente donc une souplesse d'utilisation et d'adaptation extrêmement intéressante, offrant des possibilités que ne permettent pas les boîtes de jonction connues. De plus, elle est d'un prix de revient faible et aisément démontable, ce qui présente un avantage évident lors du stockage d'un ensemble de boîtes démontées, qui peut être réalisé sous un encombrement particulièrement réduit.

L'invention n'est pas limitée au mode de réalisation décrit et peut comporter de nombreuses variantes d'exécution. Ainsi, il est évident que le nombre de secteurs circulaires utilisés peut varier, ce nombre pouvant être par exemple de deux à quatre secteurs identiques, les ouvertures formées dans ceux-ci pouvant être de diamètre quelconque et positionnées de façon variable dans les secteurs. Elles doivent cependant être au moins légèrement excentrées par rapport à leurs axes de symétrie afin d'offrir plusieurs possibilités de branchement pour chaque secteur. Il est également possible de former des cannelures sur les bouchons excentrés 24, ce qui permet de faire varier de façon discon-

7   0038255

tinue la position angulaire de ceux-ci, et d'assurer un
verrouillage efficace dans la position retenue.

REVENDICATIONS

1. Boîte de jonction pour installation de drainage agricole ou d'assainissement, agencée pour pouvoir servir de raccordement à plusieurs tuyaux collecteurs (1, 2), comprenant des secteurs cylindriques (3, 4, 5, 6) percés d'ouvertures (7, 8, 9,11) entourées extérieurement de manchons de réception et d'appui pour des tuyaux collecteurs (2) de diamètres correspondants, caractérisée en ce que les ouvertures (7, 8, 9, 11) sont décentrées par rapport aux axes de symétrie des secteurs (3, 4, 5, 6) qui constituent un cylindre complet lorsqu'ils sont assemblés, et cette boîte comporte un fond (16) et un couvercle (17) présentant des rainures circulaires (21, 22) dans lesquelles peuvent coulisser les différents secteurs (3, 4, 5, 6), qui sont suscep-tibles d'être positionnés de façon différente relativement les uns aux autres, afin d'orienter leurs ouvertures (7, 8, 9, 11) de raccordement aux collecteurs suivant différentes combinaisons appropriées.

2. Boîte de jonction selon la revendication 1, caractérisée en ce qu'elle est équipée de bouchons réducteurs (24) dans lesquels sont formés des trous excentrés (26) de diamètres variables de raccordement à des collecteurs (1), ces bouchons (24) étant adaptés pour venir s'encastrer sur les manchons (12, 15) en pouvant tourner autour de ceux-ci, afin de faire varier la hauteur des trous de raccordement pour les ajuster à celle des collecteurs correspondants (1).

3. Boîte de jonction selon l'une des revendications 1 et 2, caractérisée en ce qu'elle est pourvue de bouchons amovibles (27) d'obturation des ouvertures de raccordement des secteurs non utilisées.

4. Boîte de jonction selon l'une des revendications 1 à 3, caractérisée en ce que le couvercle (17) est constitué d'une couronne circulaire (18) dans laquelle est formée la rainure (22) de maintien des secteurs (3-6) et d'un obturateur (19) venant s'encastrer amoviblement dans cette couronne (18), cet obturateur (19) ayant une résistance suffisante pour pouvoir résister au poids des terres dans lesquelles la boîte doit être enfouie.

FIG_1

FIG_2

FIG_3

| ● | Office européen<br>des brevets | **RAPPORT DE RECHERCHE EUROPEENNE** | 0038255 |
|---|---|---|---|

Numéro de la demande

EP 81 40 0567

| **DOCUMENTS CONSIDERES COMME PERTINENTS** | | | **CLASSEMENT DE LA DEMANDE (Int. Cl.³)** |
|---|---|---|---|
| Catégorie | Citation du document avec indication, en cas de besoin, des parties pertinentes | Revendication concernée | |
| | **FR - A - 2 093 782** (FACHVERBAND)<br>  * Page 1, ligne 29 - page 3, ligne 12; page 3, ligne 30 - page 5, ligne 10; figures 1-6 *<br><br>-- | 1 | F 16 L 41/02<br>E 03 F  5/02 |
| | **GB - A - 965 831** (THE MARLEY TILE)<br>  * Page 1, lignes 26-80; page 2, lignes 14-113; figures 1-4 *<br><br>-- | 1,3,4 | |
| | | | **DOMAINES TECHNIQUES RECHERCHES (Int. Cl.³)** |
| A | **US - A - 1 391 336** (MEINERS)<br><br>---- | | F 16 L<br>E 03 F<br>E 02 B |
| | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 04-06-1981 | ANGIUS |

**OEB Form 1503.1  06.78**